Europäisches Patentamt

European Patent Office

Office européen des brevets

(19)

(11) Veröffentlichungsnummer: **0 073 360**
**B1**

(12) **EUROPÄISCHE PATENTSCHRIFT**

(45) Veröffentlichungstag der Patentschrift:
04.12.85

(51) Int. Cl.⁴: **A 01 D 34/64**

(21) Anmeldenummer: 82107063.8

(22) Anmeldetag: 04.08.82

(54) **Mähmaschine.**

(30) Priorität: 31.08.81 DE 3134391

(43) Veröffentlichungstag der Anmeldung:
09.03.83 Patentblatt 83/10

(45) Bekanntmachung des Hinweises auf die Patenterteilung:
04.12.85 Patentblatt 85/49

(84) Benannte Vertragsstaaten:
AT BE CH DE FR GB LI NL

(56) Entgegenhaltungen:
DE - A - 2 129 804
FR - A - 2 432 828
GB - A - 2 022 382
US - A - 3 308 611

(73) Patentinhaber: Klöckner-Humboldt-Deutz AG
Zweigniederlassung Fahr, D-7702 Gottmadingen (DE)

(72) Erfinder: Maier, Martin, Hilzingerstrasse 23,
D-7702 Gottmadingen (DE)
Erfinder: Ruprecht, Hermann,
Johann-Sebastian-Bach-Strasse 14, D-7700 Singen (DE)

(74) Vertreter: Haft, Uwe Michael, Dipl.-Phys. et al,
Patentanwälte Haft, Berngruber, Czybulka
Hans-Sachs-Strasse 5, D-8000 München 5 (DE)

## Beschreibung

Die Erfindung betrifft eine Mähmaschine mit einem Mähwerkbalken, der wenigstens ein rotierendes Werkzeug an seiner Unterseite trägt und mit einem gelenkig am Mähwerkbalken und gelenkig am Anbaubock zum Anschluß an einen Schlepper angeordneten Tragbalken, der in seiner Arbeitsstellung quer zur Fahrtrichtung der Maschine angeordnet ist, wobei der Tragbalken an einer in etwa mittig hinter dem Schlepper am Anbaubock fest angeordneten vertikalen Schwenkachse angelenkt ist.

Derartige Mähmaschinen, die quer zur Fahrtrichtung des sie ziehenden Schleppers angeordnet sind, erlauben je nach der Anzahl der am Mähwerkbalken angeordneten Mähwerkzeuge eine relativ große Fläche zu mähen. Nach Beendigung des Mähvorgangs muß nun die Mähmaschine, da sie erheblich über die Breite des Schleppers hinausragt, in eine Transportstellung gebracht werden, um den Verkehr nicht zu gefährden.

Es sind bereits schwenkbare Mähmaschinen bekannt (DE-A-2 129 804), die an einer vertikalen Schwenkachse angelenkt sind, welche am Anbaubock etwa in der Mitte des Schleppers vorgesehen ist. In ihrer Transportstellung wird dann die Mähmaschine um diese vertikale Achse nach hinten geschwenkt, so daß sie in Fahrtrichtung des Schleppers zu liegen kommt. Zwar ragt sie nun nicht mehr über die größten Seitenabmessungen des Schleppers hinaus, jedoch hat diese Stellung noch den Nachteil, daß bei der Transportfahrt der Schwerpunkt weit hinter dem Schlepper liegt. In Extremfällen kann es zum Abheben der Vorderräder des Schleppers, insbesondere bei holprigen Wegen führen.

Der vorliegenden Erfindung liegt die Aufgabe zugrunde, eine Mähmaschine zu schaffen, bei der der gemeinsame Schwerpunkt von Schlepper und Mähmaschine bei der Transportfahrt nahe am Schlepper liegt, bei der die Gelenkwelle zum Antrieb der Mähwerkzeuge in jeder Stellung angekuppelt bleiben kann, bei der die zulässige Transportbreite nicht überschritten wird und bei der in Transportstellung ein angehängter Wagen mitgeführt werden kann, ohne daß die Mähmaschine abgenommen werden muß.

Ausgehend von einer Mähmaschine der eingangs näher genannten Art erfolgt die Lösung dieser Aufgabe mit den im kennzeichnenden Teil des Anspruchs 1 angegebenen Merkmalen. Vorteilhafte Ausgestaltungen sind in den Unteransprüchen beschrieben.

Durch die kombinierte Anordnung einer vertikalen Schwenkachse mittig am Anbaubock und einer horizontalen Schwenkachse am Tragbalken außerhalb des Bereichs des Anbaubocks ergeben sich bedeutende Vorteile. Zum einen liegt der Schwerpunkt der Mähmaschine bei Transportfahrt näher am Schlepper, da diese nach oben geklappt ist. Zum anderen kann die Gelenkwelle in jeder Stellung angekuppelt bleiben, gleichgültig ob die Mähmaschine seitlich neben dem Schlepper hochgeklappt ist oder in axialer Längsrichtung hinter dem Schlepper hochgeklappt ist. Des weiteren kann, da die Mähmaschine in jeder beliebigen Zwischenstellung zwischen ihrer Arbeitsstellung und ihrer Transportstellung festgehalten werden kann, auch eine sehr steile und aufwärts geneigte Böschung gemäht werden.

Ein weiterer Vorteil ist darin zu sehen, daß auch mit angehängtem Wagen gearbeitet werden kann, wobei in diesem Fall die Mähmaschine seitlich vom Schlepper in der hochgeklappten Stellung verbleibt. In dieser Stellung ist auch bei hochgeklapptem Mähwerk eine Einhaltung der zulässigen, durch den angehängten Wagen bestimmten Transportbreite gewährleistet, so daß der Schlepper mit hochgestelltem Mähwerk und angehängtem Wagen bewegt werden kann. Durch das Vorsehen einer offenen hydraulischen Druckleitung kann sich die Mähmaschine in ihrer Arbeitsstellung mit dem äußeren Tragbalkenteil um einen kleinen Winkel selbst anheben, um so den Bodenunebenheiten besser folgen zu können.

Durch die Anordnung der von unten den Tragbalken umgreifenden Tragtasche wird der äußere Tragbalkenteil in seiner Arbeitsstellung geführt, wodurch die Stabilität erhöht wird.

Im folgenden wird die Erfindung anhand der Zeichnung näher erläutert, in der vorteilhafte Ausführungsbeispiele dargestellt sind. Es zeigt

Figur 1 eine Seitenansicht der erfindungsgemäßen Mähmaschine in ihrer Arbeitsstellung;

Figur 2 eine Draufsicht auf die Mähmaschine in Arbeitsstellung;

Figur 3 Einzelheiten;

Figuren 4 und 5 zwei verschiedene schematische Transportstellungen.

In den Figuren ist mit 1 der Anbaubock bezeichnet, der am Drehpunktanschluß eines Schleppers angebaut werden kann. Der Tragbalken für das Mähwerkzeug ist in drei Teile unterteilt, wobei das innere Teil 3a an einer vertikalen Schwenkachse 2 angelenkt ist, während das äußere Tragbalkenteil 3b mit dem inneren Tragbalkenteil 3a über eine Tragtasche 13 und eine horizontale Gelenkachse 20 verbunden ist. In der Nähe der Gelenkachse 20 und senkrecht auf dem Tragbalkenteil 3b ist eine Lasche 10 befestigt, an der die Zugstange 12 eines hydraulischen Hubzylinders 11 angreift. Das andere Ende des Hubzylinders ist am Anbaubock angelenkt.

Mit 3c ist ein Verlängerungsstück des Tragbalkens bezeichnet, das in das äußere Tragbalkenteil 3b angreift und dort mittels Bolzen in einer beliebigen Stellung verriegelbar ist. Das Verlängerungsstück 3c trägt eine nach unten gerichtete Traglasche 22, an der eine waagerechte Welle 23 angeordnet ist, die in dem Mähwerkbalken 4 eingreift. Der Mähwerkbalken 4 kann um diese Welle 23 geringe Pendelbewegungen ausführen, um so Bodenunebenheiten besser ausgleichen zu können.

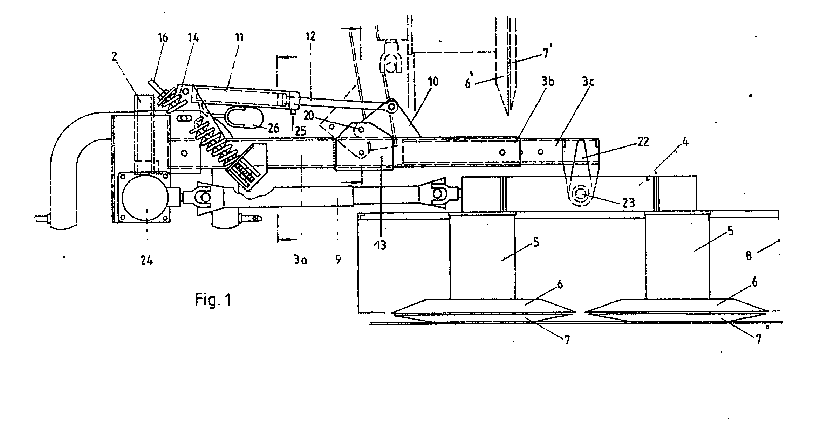

In Figur 1 ist ferner mit 9 eine übliche Antriebswelle für die Mähwerkzeuge bezeichnet, von denen zwei dargestellt sind. Diese weisen eine Mähtrommel 5, ein mit rotierenden Messern versehenen Schneidteller 6 sowie einen frei drehbaren Gleitteller 7 auf und eine Schutzverkleidung 8. Die Antriebswelle 9 wird in herkömmlicher Art und Weise von einem Getriebe 24 in Drehungen versetzt.

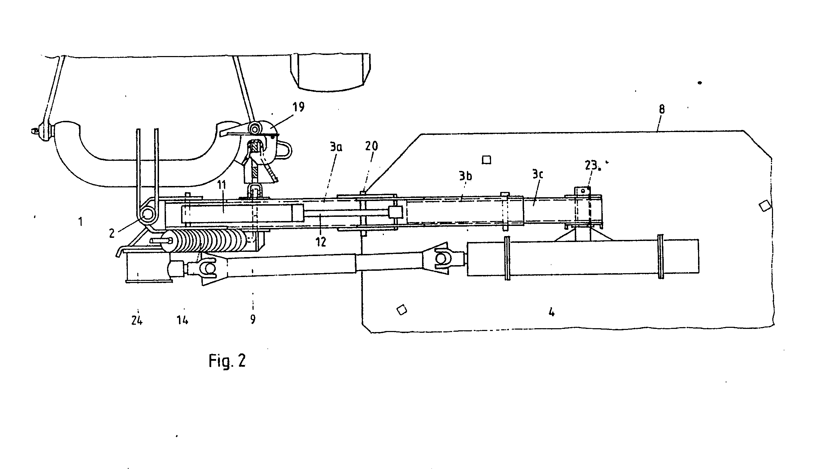

Am Tragbalkenteil 3a ist ferner eine Verriegelungsvorrichtung vorgesehen, die ein Federelement 14, 16 und einen Riegel 19 aufweist. Diese Verriegelungsvorrichtung ermöglicht es, daß die Mähmaschine beim Anstoßen an ein kleines Hindernis um einen geringen Betrag nach hinten verschwenkt wird und nach Überwinden des Hindernisses ihre ursprüngliche Arbeitsstellung wieder einnimmt, wie es in Figur 1 und 2 gezeigt ist.

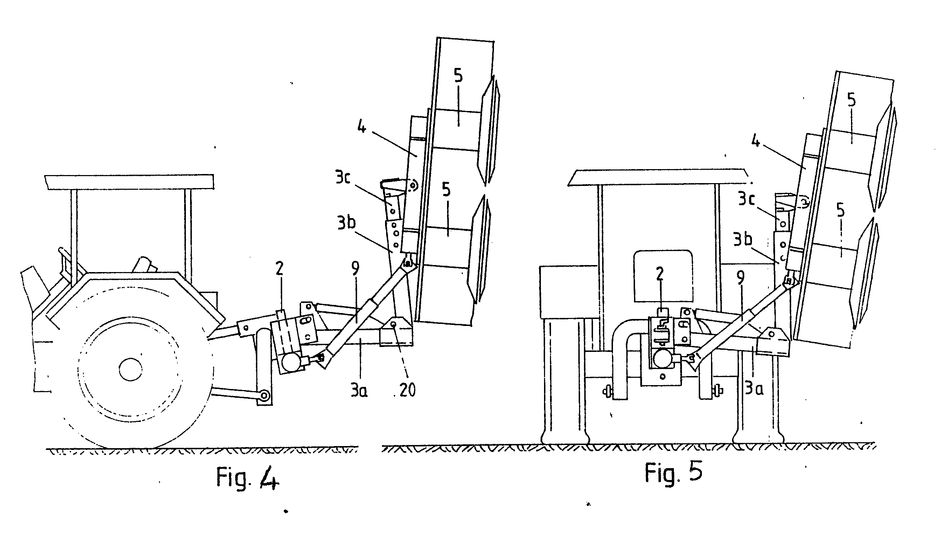

In den Figuren 1 und 2 ist die Maschine in ihrer Arbeitsstellung dargestellt. Der Hubzylinder 11 ist mit dem Hydraulikanschluß des Schleppers über den Stutzen 25 verbunden, so daß bei Zufuhr von Öl die Zugstange 12 eingefahren wird. Dadurch klappt der Tragbalkenteil 3b mit dem Verlängerungsstück 3c und dem Mähwerkbalken 4 samt Mähwerkzeugen senkrecht nach oben, wie es in Figur 1 mit den Positionen 6' und 7' gestrichelt angedeutet ist. In dieser Stellung, die auch in Figur 5 in Hinteransicht gezeigt ist, kann der Schlepper mit hochgeklappter Mähmaschine und angehängtem Wagen bewegt werden. Es ist ferner auch möglich, die Mähmaschine in jeder beliebigen Zwischenstellung zu halten, so daß auch sehr steile Böschungen gemäht werden können. Mit 26 ist ein Hydraulikspeicher am Hubzylinder 11 bezeichnet, der es bei offener Druckleitung ermöglicht, daß sich der Tragbalken mit dem Mähwerkbalken um einen kleinen Winkel selbst anheben kann, um so Bodenunebenheiten ausgleichen zu können.

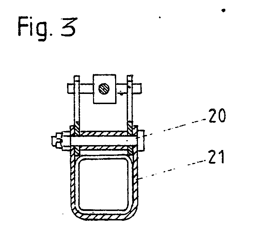

Figur 3 zeigt einen Schnitt auf Höhe der horizontalen Schwenkachse 20 durch den Tragbalken, wobei mit 21 eine Führungstasche für den äußeren Tragbalkenteil bezeichnet ist, der gleichzeitig als Anschlag dient.

Durch das Vorsehen der vertikalen Gelenkachse 2 etwa mittig am Anbaubock 1 kann nun auch die hochgeklappte Mähmaschine in Längsrichtung hinter den Schlepper transportiert werden, wie es in Figur 4 schematisch dargestellt ist. Dadurch ist sichergestellt, daß sie an keiner Stelle die Maximalbreite des Schleppers überschreitet. In jedem Fall ist gewährleistet, daß die Gelenkwelle 9 nicht abgekuppelt werden muß, d. h. sowohl in Arbeits- als auch in jeder beliebigen Transportstellung angekuppelt bleiben kann.

## Patentansprüche

1. Mähmaschine mit einem Mähwerkbalken (4), der wenigstens ein rotierendes Mähwerkzeug (5) an seiner Unterseite trägt und mit einem gelenkig am Mähwerkbalken und gelenkig am Anbaubock (1) zum Anschluß an einen Schlepper angeordneten Tragbalken (3), der in seiner Arbeitsstellung quer zur Fahrtrichtung der Maschine angeordnet ist, wobei der Tragbalken (3) an einer in etwa mittig hinter dem Schlepper am Anbaubock (1) fest angeordneten vertikalen Schwenkachse (2) angelenkt ist, dadurch gekennzeichnet, daß der Tragbalken (3) aus einem inneren Teil (3a) und einem äußeren Teil (3b) besteht und in etwa seiner Mitte eine horizontale Schwenkachse (20) aufweist, um die der äußere Teil (3b) des Tragbalkens zusammen mit dem an ihm um einen begrenzten Winkel drehbaren Mähwerkbalken (4) nach oben verschwenkbar ist, und daß der äußere Teil (3b) des Tragbalkens mit einem hydraulischen Zylinder (11) verbunden ist, dessen unteres Ende am Anbaubock angelenkt ist.

2. Mähmaschine nach Anspruch 1, dadurch gekennzeichnet, daß die horizontale Schwenkachse (20) oberhalb des Tragbalkens (3) und quer zu ihm in einer den Tragbalken von unten her umgreifenden Tragtasche (13) angeordnet ist.

3. Mähmaschine nach Ansprüchen 1 und 2, dadurch gekennzeichnet, daß im äußeren Tragbalkenteil (3b) ein Verlängerungsstück (3c) gleitbar und verriegelbar angeordnet ist, an dem der Mähwerkbalken (4) befestigt ist und daß in der Nähe der vertikalen Schwenkachse (2) eine Verriegelungsvorrichtung angeordnet ist, die ein Federelement (14, 16) und einen Riegel (19) aufweist.

4. Mähmaschine nach einem der vorhergehenden Ansprüche, dadurch gekennzeichnet, daß der hydraulische Hubzylinder (11) mit einer ausfahrbaren Zugstange (12) versehen ist, die an einer senkrecht auf dem äußeren Tragbalkenteil (3b) neben der horizontalen Schwenkachse (20) angeordneten Lasche (10) angelenkt ist.

## Claims

1. Mowing machine with a cutter bar (4) carrying at least one rotatable cutting tool (5) on its underside, and with a supporting beam (3) which is articulated on the cutter bar and on the mounting frame (1) for connection to a tractor and which, in its working position, is arranged transversely relative to the direction of travel of the machine, the supporting beam (3) being articulated on a vertical pivot axle (2) fixed to the mounting frame (1) approximately centrally behind the tractor, characterised in that the supporting beam (3) consists of an inner part (3a) and of an outer part (3b) and has approximately at its centre a horizontal pivot axle (20), about which the outer part (3b) of the supporting beam can be pivoted upwards together with the cutter bar (4) rotatable on it through a limited angle, and in that the outer part (3b) of the supporting beam is connected to a hydraulic cylinder (11), the lower end of which is articulated on the mounting frame.

2. Mowing machine according to claim 1, characterised in that the horizontal pivot axle (20) is arranged above the supporting beam (3) and transversely relative to it in a supporting pocket (13) engaging round the supporting beam from below.

3. Mowing machine according to claims 1 and 2, characterised in that an extension piece (3c), to which the cutter bar (4) is fastened, is arranged in the outer part (3b) of the supporting beam so as to be slideable and lockable, and in that a locking device having a spring element (14, 16) and a bolt (19) is arranged in the vicinity of the vertical pivot axle (2).

4. Mowing machine according to any one of the preceding claims, characterised in that the hydraulic lifting cylinder (11) is provided with an extendable connecting rod (12) which is articulated on a plate (10) arranged vertically on the outer part (3b) of the supporting beam next to the horizontal pivot axle (20).

**Revendications**

1. Faucheuse possédant une barre de coupe (4), laquelle porte au moins une lame de coupe rotative (5) sur son côté intérieur, et possédant une barre-support (3), fixée d'une manière articulée à la barre de coupe et d'une manière articulée au support (1) destiné à l'attelage à un tracteur, barre-support qui, dans sa position de travail, est disposée perpendiculairement au sens de déplacement de la faucheuse, la barre-support (3) étant liée par articulation à un axe de pivotement vertical (2), disposé à demeure au support d'attelage (1), en position approximativement centrale derrière le tracteur, caractérisée en ce que la barre-support (3) est constituée d'une partie intérieure (3a) et d'une partie extérieure (3b) et présente, approximativement en son milieu, un axe de pivotement horizontal (20), autour duquel peut pivoter vers le haut la partie extérieure (3b) de la barre-support, en même temps que la barre de coupe (4), laquelle peut tourner autour de la barre-support selon un angle limité, et en ce que la partie extérieure (3b) de la barre-support est reliée à un vérin hydraulique (11) dont l'extrémité inférieure est raccordée par articulation au support d'attelage.

2. Faucheuse selon la revendication 1, caractérisée en ce que l'axe de pivotement horizontal (20) est disposé au-dessus de la barre-support (3) et, perpendiculairement á cette dernière, dans un logement de soutènement (13), qui entoure par en-dessous la barre-support.

3. Faucheuse selon les revendications 1 et 2, caractérisée en ce que, dans la partie extérieure (3b) de la barre-support est disposée, avec possibilité de coulissement et de verrouillage, une rallonge (3c) à laquelle est fixée la barre de coupe (4), et en ce qu'est disposé au voisinage de l'axe de pivotement vertical (2) un dispositif de verrouillage possédant un élément de ressort (14, 16) et un verrou (19).

4. Faucheuse selon l'une quelconque des revendications 1 à 3, caractérisée en ce que le vérin de relevage hydraulique (11) est pourvu d'une bielle de traction (12) extensible, qui est liée par articulation à une collerette (10), disposée perpendiculairement à la partie extérieure (3b) de la barre-support, à côté de l'axe de pivotement horizontale (20).

Fig. 1

0 073 360

19

3a 20

11

23

3b 3c

1

2

12

24 14 9

4

8

Fig. 2

Fig. 3

20

21

Fig. 4

Fig. 5